# EUROPÄISCHE PATENTANMELDUNG

(11) **EP 3 834 998 A1**
(43) Veröffentlichungstag der Anmeldung: **16.06.2021**
(21) Anmeldenummer: 19215346.8
(22) Anmeldetag: 11.12.2019
(51) Int. Cl.: B25J 9/16, B25J 13/08

(54) **VERFAHREN, COMPUTER-PROGRAMM-PRODUKT UND ROBOTERSTEUERUNG ZUM KONFIGURIEREN EINER ROBOTER-OBJEKT-SYSTEMUMGEBUNG SOWIE ROBOTER**

(71) Anmelder: Siemens Aktiengesellschaft, 80333 München (DE)
(72) Erfinder: Dietrich, Vincent, 80639 München (DE); Wirnshofer, Florian, 80335 München (DE); Deroo, Frederik, 81549 München (DE); Eidenberger, Robert, 81539 München (DE); Meyer-Delius Di Vasto, Daniel, 81541 München (DE); Schmitt, Philipp Sebastian, 81735 München (DE)

(57) **Zusammenfassung**

Um im Zuge der Konfiguration einer Roboter-Objekt-Systemumgebung (ROSU, ROSU') auftretende Diskrepanzen zwischen Realität der Roboter-Objekt-Systemumgebung und deren Digitaler Repräsentation als CAD-Modell automatisch, ohne manuelle Vor-Ort-Inbetriebnahme der Roboter-Objekt-Systemumgebung mit einer Adaption des CAD-Modells an die Realität eliminieren zu können, wird es zum Konfigurieren einer Roboter-Objekt-Systemumgebung mit mindestens einem Objekt (OB, OB') und einem Roboter (RB) zur Objektmanipulation und Objekterfassung vorgeschlagen, einen die Roboter-Objekt-Systemumgebung digital repräsentierender, den Roboter für die Objektmanipulation auf der Basis eines Steuerungsprogramms (STP, STP') steuernder Digital-Roboter-Zwilling (DRZ, DRZ') für einen zielführenden Einsatz des Roboters in der Roboter-Objekt-Systemumgebung bei der Objektmanipulation zweistufig zu synchronisieren, wobei (i) in einer Erststufe (ES) jedes Objekt in der Roboter-Objekt-Systemumgebung im Zuge des Steuerungsprogrammablaufs solange in Bezug auf eine Objektposition optisch erfasst wird bis eine erste Roboter-Objekt-Mindestdistanz in der Roboter-Objekt-Systemumgebung als Erststufen-Genauigkeitsbedarf (ESGB) für alle Objekte bei der optischen Objekterfassung zumindest erreicht ist, und (**ii**) in einer Zweitstufe (ZS) jedes Objekt in der Roboter-Objekt-Systemumgebung im Zuge des Steuerungsprogrammablaufs solange in Bezug auf eine Objektposition durch Bestimmung von Objektposenverteilung oder durch Bestimmung von Objektposenverteilung und Roboterkontakt erfasst wird bis eine zweite Roboter-Objekt-Mindestdistanz in der Roboter-Objekt-Systemumgebung als Zweitstufen-Genauigkeitsbedarf (ZSGB) für alle Objekte bei der objektposenverteilungs-/kontaktbasierten Objekterfassung zumindest erreicht ist.

## Beschreibung

Die Erfindung bezieht sich auf Verfahren zum Konfigurieren einer Roboter-Objekt-Systemumgebung gemäß dem Oberbegriff des Patentanspruches 1, ein Computer-Programm-Produkt zum Konfigurieren einer Roboter-Objekt-Systemumgebung gemäß dem Oberbegriff des Patentanspruches 13, eine Robotersteuerung zum Konfigurieren einer Roboter-Objekt-Systemumgebung gemäß dem Oberbegriff des Patentanspruches 15 und einen Roboter gemäß dem Oberbegriff des Patentanspruches 16.

Eine Roboter-Objekt-Systemumgebung im Sinne der vorliegenden Erfindung ist die Umgebung eines automatisierten Systems, in der ein Roboter als ein automatisch gesteuertes, wiederprogrammierbares, vielfach einsetzbares Handhabungsgerät (z.B. in Industrie, im Service, im Gelände oder autonom agierend) mit mehreren Freiheitsgraden, dessen Bewegungen programmierbar und gegebenenfalls sensorgeführt sind und das entweder ortsfest oder beweglich zur Ausführung von Handhabungs- und/oder Fertigungsaufgaben an einem oder mehreren Objekten oder Gegenständen eingesetzt wird. Das automatisierte System kann dabei z.B. in Form und Gestalt eine Fertigungs- oder Roboterzelle sein.

Für diesen Einsatz gilt es die Roboter-Objekt-Systemumgebung bzw. die Zelle so zu konfigurieren, dass auftretende Diskrepanzen zwischen Realität der Roboter-Objekt-Systemumgebung und deren Digitaler Repräsentation als CAD-Modell in Bezug auf Posen von Objekt und Roboter nicht auftreten. Die Pose ergibt sich dabei aus der Kombination von Position und Orientierung eines freien starren Körpers (z.B. Roboter mit seinen Einzelkomponenten und Objekt) mit 6 Freiheitgraden im Raum. Man spricht in diesem Fall auch von einer 6D-Pose des Körpers. Im allgemeinen Sprachgebrauch wird, wenn die räumliche Lage eines Körpers zu bestimmen ist und wo eigentlich genau genommen die Pose des Körpers zu bestimmen wäre, unpräzise von der Bestimmung einer Körperposition gesprochen. Diesem allgemeinen Sprachgebrauch folgend wird auch im Rahmen der vorliegenden Anmeldung der Begriff einer Objektposition verwendet und im Zuge dessen auch von Objektpositionsdaten gesprochen, wenngleich eigentlich die präzisere Verwendung der Begriffe Objektpose und Objektposedaten trotz deren seltenen Vorkommens im allgemeinen Sprachgebrauch angesagt wäre.

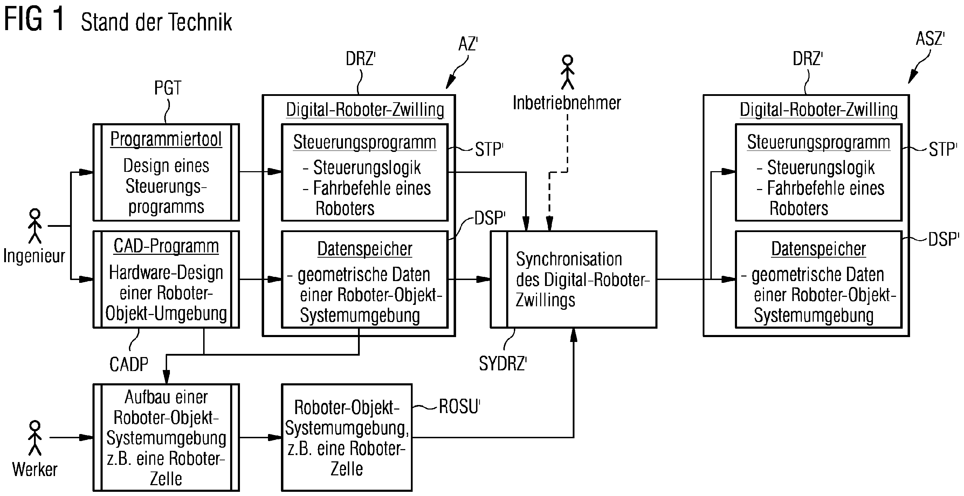

FIGUR 1 zeigt anhand eines Prinzip-Schaubildes wie die herkömmliche Konfiguration einer Roboter-Objekt-Systemumgebung ROSU', die z.B. als Roboterzelle ausgebildet ist, zur Vermeidung der auftretenden Diskrepanzen zwischen Realität der Roboter-Objekt-Systemumgebung ROSU' und deren Digitaler Repräsentation durch einen im Fachjargon auch als "digital twin" bezeichneten Digital-Roboter-Zwilling DRZ' abläuft oder durchgeführt wird. Diese Konfiguration gliedert sich in drei Phasen unterteilt, die unabhängig voneinander durch manuelle Maßnahmen von Personen durchgeführt werden.

In einer ersten Phase wird der Digital-Roboter-Zwilling DRZ', z.B. von einem Ingenieur, erzeugt. Dazu erstellt dieser mit Hilfe eines Progammiertools PGT, z.B. eines "Totally Integrated Automation <TIA>"-Portals, den Entwurf (das Design) eines Steuerungsprogramms STP' und mit Hilfe eines "Computer Aided Design <CAD>"-Programms CADP einen Hardware-Entwurf (ein Hardware-Design) der Roboter-Objekt-Systemumgebung ROSU'. Das Steuerungsprogramm STP', in dem eine Steuerungslogik für ein Roboter und Fahrbefehle des Roboters enthalten sind, wird unmittelbarer, integraler Bestandteil des Digital-Roboter-Zwillings DRZ', während das Hardware-Design, in dem geometrischen Daten der Roboter-Objekt-Systemumgebung ROSU' enthalten sind, in einem Datenspeicher DSP' des Digital-Roboter-Zwillings DRZ' gespeichert werden. Dies ist ein aktueller Zustand AZ' des Digital-Roboter-Zwillings DRZ'.

In einer zweiten Phase wird die Roboter-Objekt-Systemumgebung ROSU' bzw. die Roboterzelle, z.B. von einem Werker, aufgebaut. Dieser Aufbau beinhaltet die reale örtliche Positionierung von mindestens einem Objekt und des Roboters in der Roboter-Objekt-Systemumgebung ROSU' und die Gestaltung der Roboter-Objekt-Systemumgebung ROSU' gemäß der in dem Datenspeicher DSP hinterlegten geometrischen Daten. Die so real aufgebaute Roboter-Objekt-Systemumgebung ROSU' muss nun mit dem Digital-Roboter-Zwilling DRZ' in dem aktuellen Zustand AZ' synchronisiert werden.

In einer dritten Phase wird demzufolge, z.B. von einem Inbetriebnehmer der Roboter-Objekt-Systemumgebung ROSU', eine manuelle Synchronisation des Digital-Roboter-Zwillings SYDRZ' in dem aktuellen Zustand AZ' durchgeführt. Das Ergebnis dieser manuell durchgeführten Synchronisation ist zwar ein aktualisierter, synchronisierter Zustand ASZ' des Digital-Roboter-Zwillings DRZ', aber durch die manuelle Herbeiführung des aktualisierten, synchronisierten Zustands AZ' des Digital-Roboter-Zwillings DRZ' ist nicht unbedingt sichergestellt, dass die identifizierten Diskrepanzen, die es zu vermeiden gilt, in dem Digital-Roboter-Zwilling DRZ' auch nachträglich berücksichtigt werden.

Die Inbetriebnahme der Roboter-Objekt-Systemumgebung ist eine entscheidende Aufgabe im Automatisierungs- und Robotik-Umfeld und wenn deshalb die Zeit für eine solche Inbetriebnahme verkürzt werden kann, so ergibt sich dadurch ein Wettbewerbsvorteil.

Die der Erfindung zugrundeliegende Aufgabe besteht darin, ein Verfahren, Computer-Programm-Produkt und eine Robotersteuerung zum Konfigurieren einer Roboter-Objekt-Systemumgebung sowie einen Roboter anzugeben, bei dem bzw. bei der im Zuge der Konfiguration der Roboter-Objekt-Systemumgebung auftretende Diskrepanzen zwischen Realität der Roboter-Objekt-Systemumgebung und deren Digitaler Repräsentation als CAD-Modell automatisch, ohne manuelle Vor-Ort-Inbetriebnahme der Roboter-Objekt-Systemumgebung mit einer Adaption des CAD-Modells an die Realität eliminiert werden.

Diese Aufgabe wird ausgehend von dem im Oberbegriff des Patentanspruches 1 definierten Verfahren durch die im Kennzeichen des Patentanspruches 1 angegebenen Verfahrensmerkmale gelöst.

Außerdem wird die Aufgabe ausgehend von dem im Oberbegriff des Patentanspruches 13 definierten Computer-Programm-Produkt durch die im Kennzeichen des Patentanspruches 13 angegebenen Computer-Programm-Produkt-Merkmale gelöst.

Darüber hinaus wird die Aufgabe ausgehend von der im Oberbegriff des Patentanspruches 15 definierten Robotersteuerung durch die im Kennzeichen des Patentanspruches 15 angegebenen Roboter-Merkmale gelöst.

Ferner wird die Aufgabe ausgehend von dem im Oberbegriff des Patentanspruches 16 definierten Roboter durch die im Kennzeichen des Patentanspruches 16 angegebenen Roboter-Merkmale gelöst.

Die der Erfindung zugrundeliegende Idee gemäß der in den Ansprüchen 1, 13, 15 und 16 jeweils angegebenen technischen Lehre besteht darin, zum Konfigurieren einer Roboter-Objekt-Systemumgebung mit mindestens einem Objekt und einem Roboter zur Objektmanipulation und Objekterfassung einen die Roboter-Objekt-Systemumgebung digital repräsentierenden, den Roboter für die Objektmanipulation auf der Basis eines Steuerungsprogramms steuernden Digital-Roboter-Zwilling für einen zielführenden Einsatz des Roboters in der Roboter-Objekt-Systemumgebung bei der Objektmanipulation zweistufig zu synchronisieren.

Dabei wird in einer Erststufe jedes Objekt in der Roboter-Objekt-Systemumgebung im Zuge des Steuerungsprogrammablaufs solange in Bezug auf eine Objektposition optisch erfasst bis eine erste Roboter-Objekt-Mindestdistanz in der Roboter-Objekt-Systemumgebung als Erststufen-Genauigkeitsbedarf für alle Objekte bei der optischen Objekterfassung zumindest erreicht ist. In einer sich daran anschließenden Zweitstufe wird jedes Objekt in der Roboter-Objekt-Systemumgebung im Zuge des Steuerprogrammablaufs solange in Bezug auf eine Objektposition durch Bestimmung von Objektposenverteilung oder durch Bestimmung von Objektposenverteilung und Roboterkontakt erfasst bis eine zweite Roboter-Objekt-Mindestdistanz in der Roboter-Objekt-Systemumgebung als Zweitstufen-Genauigkeitsbedarf für alle Objekte bei der objektposenverteilungs-/kontaktbasierten Objekterfassung zumindest erreicht ist.

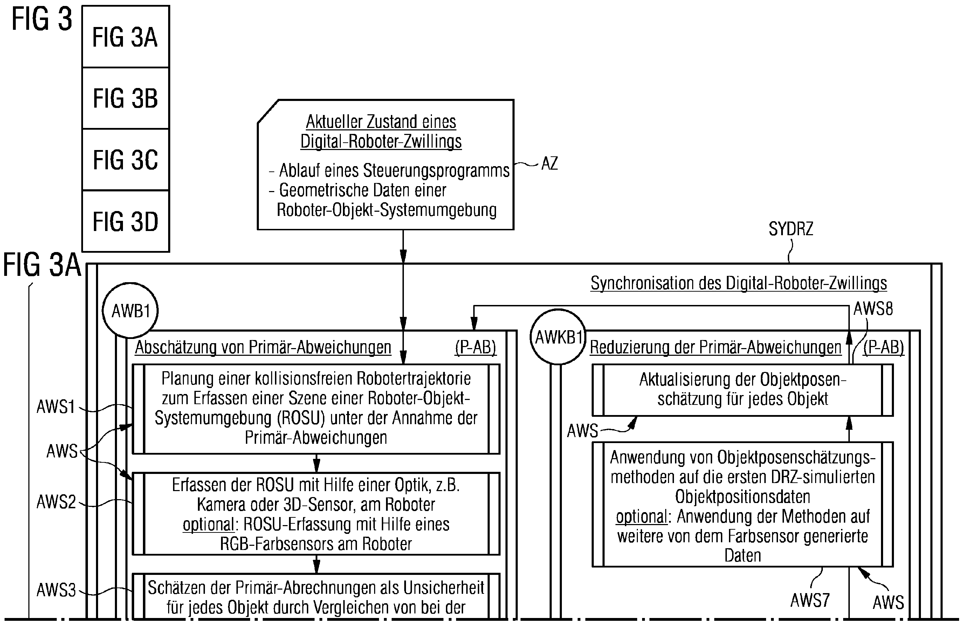

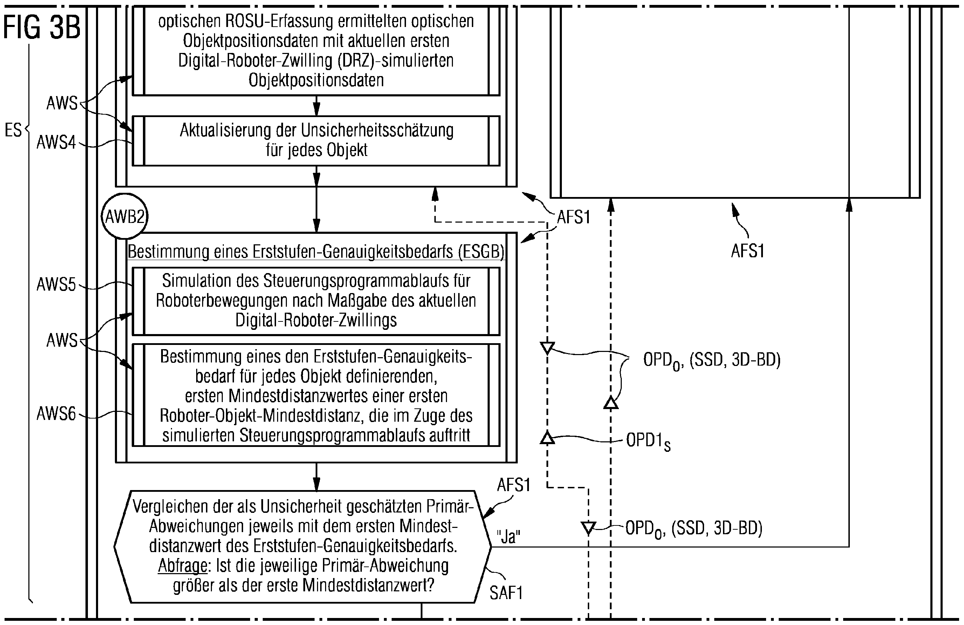

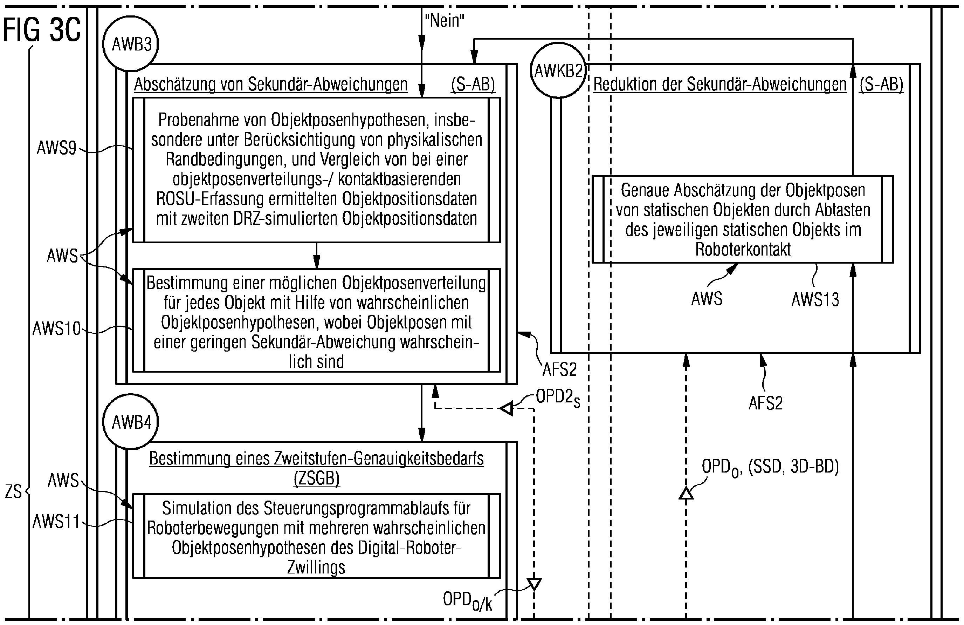

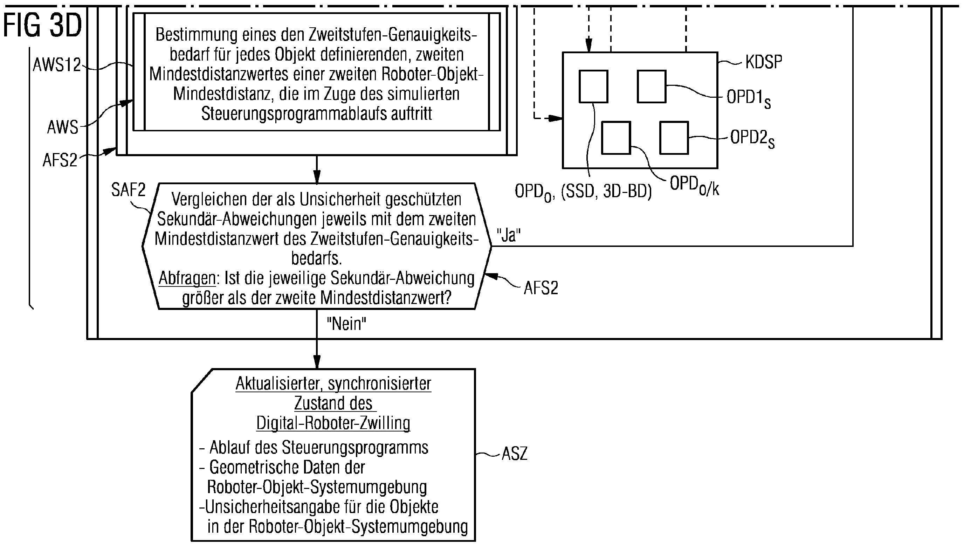

Als besonders vorteilhaft im Kontext der zweistufig durchgeführten Synchronisation des Digital-Roboter-Zwillings erweist es sich, wenn die Synchronisation gemäß den Ansprüchen 2 bis 9 und 14 in zwei Abfrageschleifen (vgl. FIGUR 3), einer ersten Abfrageschleife für jedes Objekt in der Erststufe und einer zweiten Abfrageschleife für jedes Objekt in der Zweistufe, durchlaufen wird.

Die Beurteilung der aktuellen Synchronisation wird durch einen Vergleichsschritt zwischen simulierten Daten und realen Daten sowie einem Abtastschritt, in dem die mögliche Verteilung von Objekthaltungen geschätzt wird, sichergestellt. Eine sinnvolle Beurteilung erfolgt durch Simulation des tatsächlichen Robotersteuerungsprogramms für verschiedenen Proben, die ein Maß für eine Task-Ausfallwahrscheinlichkeit bietet.

So kann dadurch die Qualität der Synchronisation gegenüber der manuellen Synchronisation gemäß dem Stand der Technik (vgl. FIGUR 1) erhöht werden. Dies zeigt sich dadurch, dass beim operativen Einsatz des Roboters in der Roboter-Objekt-Systemumgebung Fehler und Kollisionen bei der Objektmanipulation vermieden werden.

Darüber hinaus lassen sich durch eine derartig automatisch durchgeführte Synchronisation des Digital-Roboter-Zwillings die Inbetriebnahmekosten gegenüber der manuellen Inbetriebnahme senken. Dies führt letztlich dazu, dass die Roboter-Objekt-Systemumgebung häufiger als zuvor für verschiedene roboterunterstützte Handhabungs- und/oder Fertigungsaufgabe verändert werden kann.

Ferner ist durch die automatisch durchgeführte Synchronisation des Digital-Roboter-Zwillings sichergestellt, dass die identifizierten Diskrepanzen zwischen der Realität der Roboter-Objekt-Systemumgebung und deren Digitaler Repräsentation, die es zu vermeiden gilt, in dem Digital-Roboter-Zwilling auch durch eine entsprechende automatische Rückkopplung berücksichtigt werden.

Weitere Vorteile der Erfindung ergeben sich ausgehend von der FIGUR 1 aus der nachfolgenden Beschreibung eines Ausführungsbeispiels der Erfindung anhand der FIGUREN 2 bis 4. Dabei zeigen:
- FIGUR 2: eine Anordnung aus Robotersystem und Roboter-Objekt-Systemumgebung,
- FIGUR 3: ein Ablaufdiagramm zur automatischen Digital-Roboter-Zwilling-Synchronisation,
- FIGUR 4: ein Illustrationsdiagramm bezüglich dezidierter Anweisungsschritte und Schleifenabfragen des Ablaufdiagramms nach FIGUR 3.

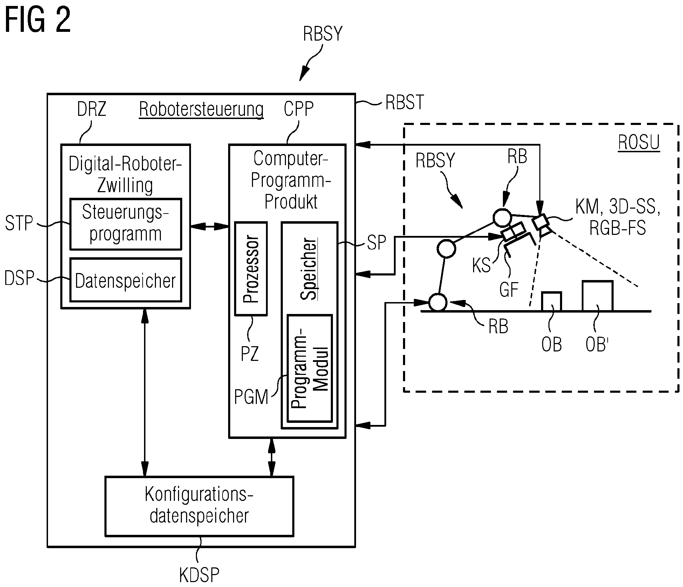

FIGUR 2 zeigt eine Anordnung aus einem Robotersystem RBSY und einer Roboter-Objekt-Systemumgebung ROSU.

Das Robotersystem RBSY enthält einer Roboter RB, der Bestandteil des Roboter-Objekt-Systemumgebung ROSU ist und dort zur Objektmanipulation und Objekterfassung eingesetzt wird, sowie zur Steuerung des Roboters RB in der Roboter-Objekt-Systemumgebung ROSU eine Robotersteuerung RBST.

Die Robotersteuerung RBST enthält dazu einen die Roboter-Objekt-Systemumgebung ROSU digital repräsentierender, den Roboter RB für die Objektmanipulation steuernder Digital-Roboter-Zwilling DRZ, ein Computer-Programm-Produkt CPP und einen Konfigurationsdatenspeicher KDSP, die in der dargestellten Weise zur Bildung einer Funktionseinheit zur Konfiguration der Roboter-Objekt-Systemumgebung ROSU, im Folgenden auch als ROSU-Konfiguration bezeichnet, und dabei, in diesem Kontext, zur Steuerung des Roboters RB funktional zusammenwirken und/oder miteinander verbunden sind.

Die Robotersteuerung RBST kann z.B. entweder - wie der Roboter RB - als eigenständig ausgebildete und auf dem Markt separat vertriebene Einheit Bestandteil des Robotersystems RBSY sein, wobei Robotersteuerung RBST und Roboter RB dabei vom selben Hersteller sein können, aber sie müssen nicht, oder die Robotersteuerung RBST bildet eine bauliche Einheit mit dem Roboter RB derart, dass diese abgestimmt auf den Roboter RB als Bundle-Paket mit diesem vertrieben wird.

Der Digital-Roboter-Zwilling DRZ wird z.B., wie der Digital-Roboter-Zwilling DRZ' in der FIGUR 1, erneut von einem Ingenieur, erzeugt, wobei auch hier wieder ein Steuerungsprogramm STP mit einer Steuerungslogik und Fahrbefehlen für den Roboter RB, auf dessen Basis der Roboter RB in der Roboter-Objekt-Systemumgebung ROSU bei der Objektmanipulation gesteuert wird, sowie ein Datenspeicher DSP zur Speicherung von geometrischen Daten der Roboter-Objekt-Systemumgebung ROSU in dem Digital-Roboter-Zwilling DRZ enthalten sind.

In dem Konfigurationsdatenspeicher KDSP werden im Kontext der ROSU-Konfiguration bereitgestellte und erzeugte Daten gespeichert. Welche Daten dies sind, wird weiter unten im Zusammenhang mit der Beschreibung von FIGUR 3 erläutert.

Das Computer-Programm-Produkt CPP als weiterer Bestandteil der Robotersteuerung RBST enthält einen nicht-flüchtigen, lesbaren Speicher SP, in dem prozessorlesbare Steuerprogrammbefehle eines die ROSU-Konfiguration durchführenden Programm-Moduls PGM gespeichert sind, und ein mit dem Speicher SP verbundener Prozessor PZ, der die Steuerprogrammbefehle des Programm-Moduls PGM zur ROSU-Konfiguration ausführt.

Für die ROSU-Konfiguration wird der die Roboter-Objekt-Systemumgebung ROSU digital repräsentierende, den Roboter RB für die Objektmanipulation auf der Basis des Steuerungsprogramms STP steuernder Digital-Roboter-Zwilling DRZ für einen zielführenden Einsatz des Roboters RB in der Roboter-Objekt-Systemumgebung ROSU bei der Objektmanipulation synchronisiert. Wie diese Synchronisation im Detail abläuft, wird auch im Zusammenhang mit der Beschreibung von FIGUR 3 erläutert.

In Analogie zu der vorstehenden Roboter-Robotersteuerung-Betrachtung kann jetzt bei einer Robotersteuerung-"Computer-Programm-Produkt"-Betrachtung das Computer-Programm-Produkt CPP bzw. präziser das die ROSU-Konfiguration durchführende Programm-Modul PGM, das jeweils vorzugsweise als APP ausgestaltet, beschaffen oder ausgebildet ist oder aber Bestandteil einer Programmierumgebung oder API für die Robotersteuerung ist, ebenfalls eigenständig und unabhängig von der Robotersteuerung als separates Produkt eines Herstellers A auf dem Markt vertrieben und dann in einer beliebigen Robotersteuerung eines Herstellers B eingesetzt werden.

Die Roboter-Objekt-Systemumgebung ROSU enthält zwei Objekte, ein erstes Objekt OB und ein zweites Objekt OB', die von dem Roboter RB zu manipulieren und zu erfassen sind. Hierzu und für die ROSU-Konfiguration weist der Roboter RB einen Greifer GF und einen Kraftsensor KS als Endeffektor sowie eine Kamera KM und/oder eine 3D-Sensorik 3D-SS im Bereich des Endeffektors auf. Optional ist es auch noch möglich, dass im Bereich des Endeffektors für die ROSU-Konfiguration auch noch eine "Rot-Grün-Blau <RGB>"-Farbsensor RGB-FS angebracht ist.

Wie diese Endeffektor-Komponenten für die ROSU-Konfiguration eingesetzt werden, wird ebenfalls im Zusammenhang mit der Beschreibung von FIGUR 3 erläutert.

FIGUR 3 zeigt ein Ablaufdiagramm zur Durchführung einer - im Gegensatz zu der manuell durchgeführten Digital-Roboter-Zwilling-Synchronisation SYDRZ' gemäß der FIGUR 1 - automatischen Digital-Roboter-Zwilling-Synchronisation SYDRZ, bei der der Digital-Roboter-Zwilling DRZ zweistufig synchronisiert wird. Dieses Ablaufdiagramm wird in dem Computer-Programm-Produkt von dem Prozessor PZ bei der Ausführung der Steuerprogrammbefehle des Programm-Moduls PGM zur ROSU-Konfiguration durchgeführt.

Ausgangspunkt für die Durchführung der automatischen Digital-Roboter-Zwilling-Synchronisation SYDRZ ist ein aktueller Zustand AZ des Digital-Roboter-Zwillings DRZ mit dem in dem Digital-Roboter-Zwilling DRZ enthaltenen Ablauf des Steuerungsprogramms STP und der in Datenspeicher DSP gespeicherten geometrischen Daten der Roboter-Objekt-Systemumgebung ROSU.

Die automatische Digital-Roboter-Zwilling-Synchronisation SYDRZ beginnt nun damit, dass gemäß einer Erststufe ES jedes Objekt OB, OB' in der Roboter-Objekt-Systemumgebung ROSU im Zuge des Ablaufs des Steuerungsprogramms STP solange in Bezug auf eine Objektposition optisch erfasst wird bis eine erste Roboter-Objekt-Mindestdistanz in der Roboter-Objekt-Systemumgebung ROSU als Erststufen-Genauigkeitsbedarf ESGB für alle Objekte OB, OB' bei der optischen Objekterfassung zumindest erreicht ist. Der Ausdruck "zumindest erreicht" soll dabei angeben oder den Fall berücksichtigen, dass die erste Roboter-Objekt-Mindestdistanz auch unterschritten werden kann.

Im Anschluss daran wird in einer Zweitstufe ZS jedes Objekt OB, OB' in der Roboter-Objekt-Systemumgebung ROSU im Zuge des Ablaufs des Steuerungsprogramms STP solange in Bezug auf eine Objektposition durch Bestimmung von Objektposenverteilung oder durch Bestimmung von Objektposenverteilung und Roboterkontakt erfasst bis eine zweite Roboter-Objekt-Mindestdistanz in der Roboter-Objekt-Systemumgebung ROSU als Zweitstufen-Genauigkeitsbedarf ZSGB für alle Objekte OB, OB' bei der objektposenverteilungs-/kontaktbasierten Objekterfassung zumindest erreicht ist. Auch hier soll mit dem Ausdruck "zumindest erreicht" soll angeben oder der Fall berücksichtigt werden, dass die zweite Roboter-Objekt-Mindestdistanz auch unterschritten werden kann.

Aufbauend auf diesem Grundprinzip der automatischen Digital-Roboter-Zwilling-Synchronisation SYDRZ werden nun für jedes Objekt OB, OB' in der Erststufe ES eine erste Abfrageschleife AFS1 und in der Zweitstufe ZS eine zweite Abfrageschleife AFS2 durchlaufen.

So werden bei der ersten Abfrageschleife AFS1 in einem ersten Anweisungsblock AWB1 für jeden Durchlauf Primär-Abweichungen P-AB als Unsicherheit geschätzt, indem bei der optischen Objekterfassung ermittelte Objektpositionsdaten OPD_{O} mit ersten von dem Digital-Roboter-Zwilling DRZ simulierten, im Folgenden als DRZ-simuliert bezeichnet, Objektpositionsdaten OPD1_{S} verglichen werden. Die ermittelten Objektpositionsdaten OPDₒ werden in den Konfigurationsdatenspeicher KDSP gespeichert und die ersten DRZ-simulierten Objektpositionsdaten OPD1_{S} werden von dem Digital-Roboter-Zwilling DRZ in den Konfigurationsdatenspeicher KDSP gespeichert und von dem Prozessor PZ ausgelesen. Wie die Objektpositionsdaten OPD_{O} in dem ersten Anweisungsblock AWB1 ermittelt werden, wird weiter unten erläutert.

Weiterhin wird bei der ersten Abfrageschleife AFS1 in einem zweiten Anweisungsblock AWB2, der nach dem ersten Anweisungsblock AWB1 durchlaufen wird, für jeden Durchlauf der Erststufen-Genauigkeitsbedarf ESGB bestimmt.

Zum Abschluss der ersten Abfrageschleife AFS1 wird in einer ersten Schleifenabfrage SAF1 eine Schleifendurchlaufbedingung derart geprüft, dass die als Unsicherheit geschätzten Primär-Abweichungen P-AB jeweils mit einem ersten Mindestdistanzwert MDW1 des Erststufen-Genauigkeitsbedarfs ESGB verglichen werden. In Abhängigkeit von dem jeweiligen Vergleich wird dann die erste Abfrageschleife AFS1 durchlaufen, wenn die erste Roboter-Objekt-Mindestdistanz noch nicht erreicht ist, also bei der Unsicherheitsschätzung die jeweilige Primär-Abweichung P-AB größer ist als der erste Mindestdistanzwert MDW1. Ist das nicht der Fall, also wenn die erste Roboter-Objekt-Mindestdistanz zumindest erreicht ist (vgl. Ausführungen weiter oben), so wird die zweistufige Synchronisation in der Zweitstufe ZS fortgesetzt.

Alternativ ist es aber auch möglich, dass die zweistufige Synchronisation beendet ist, wenn die erste Roboter-Objekt-Mindestdistanz zumindest erreicht ist, also bei der Unsicherheitsschätzung die jeweilige Primär-Abweichung P-AB kleiner ist als der erste Mindestdistanzwert MDW1.

Muss hingegen die erste Abfrageschleife AFS1 aufgrund des Prüfergebnisses in der ersten Schleifenabfrage SAF1 durchlaufen werden, so werden beim Durchlaufen der ersten Abfrageschleife AFS1 in einem ersten Anweisungskorrekturblock AWKB1 die ersten DRZ-simulierten Objektpositionsdaten OPD1_{S} zwecks Reduzierung der Primär-Abweichungen P-AB für den Durchlauf in dem ersten Anweisungsblock AWB1 verändert.

Beim Durchlauf des ersten Anweisungsblocks AWB1 werden dezidierte Anweisungsschritte AWS durchgeführt.

So wird in einem ersten Anweisungsschritt AWS1 zur Planung einer Robotertrajektorie eine Szene der Roboter-Objekt-Systemumgebung ROSU unter der Annahme der Primär-Abweichungen P-AB erfasst. Hierzu wird in einem zweiten Anweisungsschritt AWS2 die Roboter-Objekt-Systemumgebung ROSU mit Hilfe einer Optik am Roboter RB erfasst. Diese Optik kann z.B. gemäß der Darstellung in der FIGUR 2 die Kamera KM, die 3D-Sensorik 3D-SS sein. Optional ist es aber auch möglich, dass für die optische Erfassung der Roboter-Objekt-Systemumgebung ROSU zusätzlich noch der RGB-Farbsensor RGB-FS am Roboter RB angebracht wird. In diesen die Optik charakterisierenden Fällen sind die optischen Objektpositionsdaten OPDₒ von der 3D-Sensorik 3D-SS erzeugte 3D-Bilddaten 3D-BD und/oder von dem RGB-Farbsensor RGB-FS erzeugte Sensordaten SSD.

In einem weiteren dritten Anweisungsschritt AWS3 werden nun, wie bereits erwähnt, die Primär-Abweichungen P-AB als Unsicherheit für jedes Objekt OB, OB' geschätzt, indem die bei der optischen ROSU-Erfassung ermittelten Objektpositionsdaten OPD_{O} mit den ersten DRZ-simulierten Objektpositionsdaten OPD1_{S} verglichen werden.

Zum Abschluss beim Durchlauf des ersten Anweisungsblocks AWB1 wird in einem vierten Anweisungsschritt AWS4 die Unsicherheitsschätzung für jedes Objekt OB, OB' aktualisiert.

Beim Durchlauf des zweiten Anweisungsblocks AWB2 werden wieder, wie beim Durchlaufen des ersten Anweisungsblocks AWB1, weitere dezidierte Anweisungsschritte AWS durchgeführt.

So wird in einem fünfter Anweisungsschritt AWS5 der Ablauf des Steuerungsprogramms STP für Bewegungen des Roboters RB nach Maßgabe des Digital-Roboter-Zwillings DRZ im aktuellen Zustand AZ simuliert.

In einem weiteren sechsten Anweisungsschritt AWS6 wird für jedes Objekt OB, OB' der den Erststufen-Genauigkeitsbedarf ESGB definierende, erste Mindestdistanzwert MDW1 der ersten Roboter-Objekt-Mindestdistanz, die im Zuge des simulierten Steuerungsprogrammablaufs auftritt, bestimmt.

Im Zuge der ersten Abfrageschleife AFS1 werden abschließend auch beim Durchlaufen des ersten Anweisungskorrekturblocks AWKB1 zusätzlich weitere dezidierte Anweisungsschritte AWS durchgeführt.

So werden in einem siebten Anweisungsschritt AWS7 Objektposenschätzungsmethoden auf die ersten DRZ-simulierten Objektpositionsdaten OPD1_{S} angewandt [vgl. als Referenz für solche Objektposenschätzungsmethoden sei z.B. die Europäische Patentanmeldung (Anmeldung-Nr. 19178454.5) angeführt].

In einem weiteren achten Anweisungsschritt AWS8 wird die Objektposenschätzung für jedes Objekt OB, OB' aktualisiert.

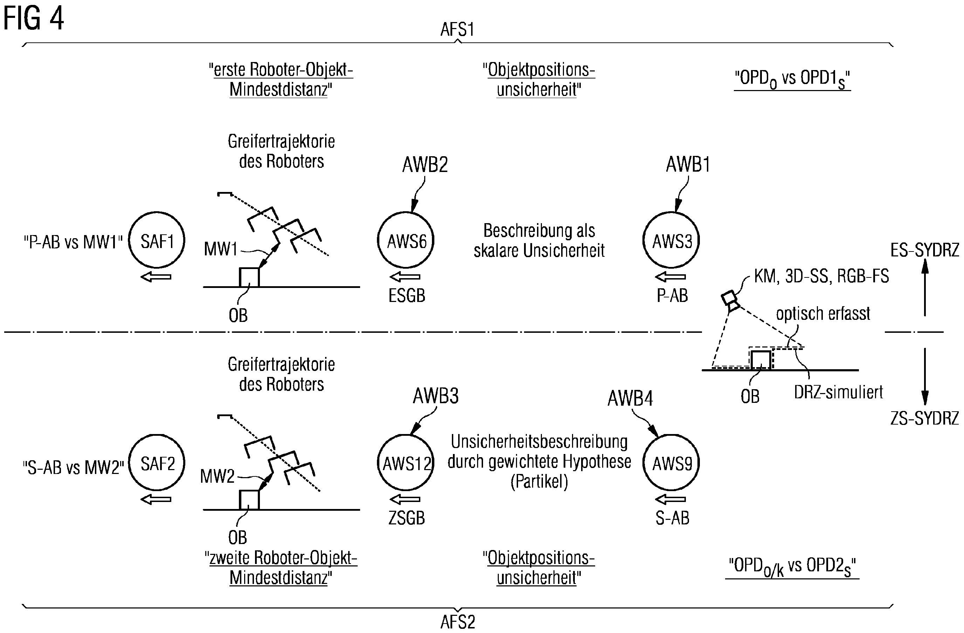

FIGUR 4 illustriert in der oberen Figurenhälfte die Erststufen-Synchronisation des Digital-Roboter-Zwillings ES-SYDRZ für die erste Abfrageschleife AFS1 mit dem dritten Anweisungsschritt AWS3 in dem ersten Anweisungsblock AWB1, dem sechsten Anweisungsschritt AWS6 in dem zweiten Anweisungsblock AWB2 und der ersten Schleifenabfrage SFA1.

In der Zweitstufe ZS der automatischen Digital-Roboter-Zwilling-Synchronisation SYDRZ werden bei der zweiten Abfrageschleife AFS2 in einem dritten Anweisungsblock AWB3 für jedem Durchlauf Sekundär-Abweichungen S-AB als Unsicherheit geschätzt, indem bei der objektposenverteilungs-/kontaktbasierten Objekterfassung ermittelte Objektpositionsdaten OPD_{O/K} mit zweiten DRZ-simulierten Roboter-Objekt-Distanzdaten OPD2_{S} verglichen werden. Die ermittelten objektposenverteilungs-/kontaktbasierten Objektpositionsdaten OPD_{O/K} werden ebenfalls in den Konfigurationsdatenspeicher KDSP gespeichert und die zweiten DRZ-simulierten Objektpositionsdaten OPD2_{S} werden auch von dem Digital-Roboter-Zwilling DRZ in den Konfigurationsdatenspeicher KDSP gespeichert und von dem Prozessor PZ ausgelesen. Wie die objektposenverteilungs-/kontaktbasierten Objektpositionsdaten OPD_{O/K} ermittelt werden, wird weiter unten erläutert.

Weiterhin wird bei der zweiten Abfrageschleife AFS2 in einem vierten Anweisungsblock AWB4, der nach dem dritten Anweisungsblock AWB3 durchlaufen wird, für jeden Durchlauf der Zweistufen-Genauigkeitsbedarf ZESGB bestimmt.

Zum Abschluss der zweiten Abfrageschleife AFS2 wird in einer zweiten Schleifenabfrage SAF2 eine Schleifendurchlaufbedingung derart geprüft, dass die als Unsicherheit geschätzten Sekundär-Abweichungen S-AB jeweils mit einem zweiten Mindestdistanzwert MDW2 des Zweitstufen-Genauigkeitsbedarfs ZSGB verglichen werden. In Abhängigkeit von dem jeweiligen Vergleich wird dann die zweite Abfrageschleife AFS2 durchlaufen, wenn die zweite Roboter-Objekt-Mindestdistanz noch nicht erreicht ist, also bei der Unsicherheitsschätzung die jeweilige Sekundär-Abweichung S-AB größer ist als der zweite Mindestdistanzwert MDW2. Ist das nicht der Fall, also wenn die zweite Roboter-Objekt-Mindestdistanz zumindest erreicht ist (vgl. Ausführungen weiter oben), ist die zweistufige Synchronisation beendet.

Muss die zweite Abfrageschleife AFS2 jedoch aufgrund des Prüfergebnisses in der zweiten Schleifenabfrage SAF1 durchlaufen werden, so werden beim Durchlaufen der zweiten Abfrageschleife AFS2 in einem einem zweiten Anweisungskorrekturblock AWKB2 die zweiten DRZ-simulierten Objektpositionsdaten OPD2_{S} zwecks Reduzierung der Sekundär-Abweichungen S-AB für den Durchlauf in dem dritten Anweisungsblock AWB3 verändert.

Beim Durchlauf des dritten Anweisungsblocks AWB3 dezidierte Anweisungsschritte AWS durchgeführt.

So werden in einem neunten Anweisungsschritt AWS9 Objektposenhypothesen, insbesondere unter Berücksichtigung von physikalischen Randbedingungen, Probe genommen (gesampelt) und - wie bereits erwähnt - die bei der objektposenverteilungs-/kontaktbasierten ROSU-Erfassung ermittelten Objektpositionsdaten OPD_{O/K} mit den zweiten DRZ-simulierten Objektpositionsdaten OPD2_{S} verglichen.

Zum Abschluss beim Durchlauf des dritten Anweisungsblocks AWB3 wird in einem zehnten Anweisungsschritt AWS10 für jedes Objekt OB, OB' eine mögliche Objektposenverteilung mit Hilfe von wahrscheinlichen Objektposenhypothesen, wobei Objektposen mit einer geringeren Sekundär-Abweichung S-AB wahrscheinlich sind, bestimmt.

Beim Durchlauf des vierten Anweisungsblocks AWB4 werden wieder, wie beim Durchlaufen des dritten Anweisungsblocks AWB3, weitere dezidierte Anweisungsschritte AWS durchgeführt.

So wird in einem elften Anweisungsschritt AWS11 der Ablauf des Steuerungsprogramms STP für Bewegungen des Roboters RB mit mehreren wahrscheinlichen Objektposenhypothesen des Digital-Roboter-Zwillings DRZ simuliert.

In einem weiteren zwölften Anweisungsschritt AWS12 wird für jedes Objekt OB, OB' der den Zweitstufen-Genauigkeitsbedarf ZSGB definierende, zweite Mindestdistanzwert MDW2 der zweiten Roboter-Objekt-Mindestdistanz, die im Zuge des simulierten Steuerungsprogrammablaufs auftritt, bestimmt.

Im Zuge der zweiten Abfrageschleife AFS2 werden abschließend auch beim Durchlaufen des zweiten Anweisungskorrekturblocks AWKB2 zusätzlich noch ein weiterer dezidierter Anweisungsschritt AWS durchgeführt.

So werden in einem dreizehnten Anweisungsschritt AWS13 Objektposen statischer Objekte der Objekte OB, OB' durch Abtasten des jeweiligen statischen Objekts im Roboterkontakt geschätzt.

FIGUR 4 illustriert in der unteren Figurenhälfte die Zweitstufen-Synchronisation des Digital-Roboter-Zwillings ZS-SYDRZ für die zweite Abfrageschleife AFS2 mit dem neunten Anweisungsschritt AWS9 in dem dritten Anweisungsblock AWB3, dem zwölften Anweisungsschritt AWS12 in dem vierten Anweisungsblock AWB4 und der zweiten Schleifenabfrage SFA2.

Die Durchführung der automatischen Digital-Roboter-Zwilling-Synchronisation SYDRZ endet damit, dass nach der - wie vorstehend erläutert - durchgeführten Synchronisation des Digital-Roboter-Zwilling SYDRZ in einem aktualisierten, synchronisierten Zustand ASZ des Digital-Roboter-Zwillings DRZ der Digital-Roboter-Zwilling DRZ inklusive des den Roboter RB für die Objektmanipulation steuernden Steuerungsprogramms STP bzw. des Steuerungsprogrammablaufs, der in dem Datenspeicher DSP gespeicherten geometrischen Daten der Roboter-Objekt-Systemumgebung ROSU und/oder Unsicherheitsangaben für die Objekte OB, OB' in der Roboter-Objekt-Systemumgebung ROSU aktualisiert wird.

## Patentansprüche

1. Verfahren zum Konfigurieren einer Roboter-Objekt-Systemumgebung (ROSU, ROSU') mit mindestens einem Objekt (OB, OB') und einem Roboter (RB) zur Objektmanipulation und Objekterfassung, bei dem ein die Roboter-Objekt-Systemumgebung (ROSU, ROSU') digital repräsentierender, den Roboter (RB) für die Objektmanipulation auf der Basis eines Steuerungsprogramms (STP, STP') steuernder Digital-Roboter-Zwilling (DRZ, DRZ') für einen zielführenden Einsatz des Roboters (RB) in der Roboter-Objekt-Systemumgebung (ROSU, ROSU') bei der Objektmanipulation synchronisiert wird,
**dadurch gekennzeichnet, dass**
der Digital-Roboter-Zwilling (DRZ, DRZ') zweistufig synchronisiert wird, wobei
**a**) in einer Erststufe (ES) jedes Objekt (OB, OB') in der Roboter-Objekt-Systemumgebung (ROSU, ROSU') im Zuge des Steuerungsprogrammablaufs solange in Bezug auf eine Objektposition optisch erfasst wird bis eine erste Roboter-Objekt-Mindestdistanz in der Roboter-Objekt-Systemumgebung (ROSU, ROSU') als Erststufen-Genauigkeitsbedarf (ESGB) für alle Objekte (OB, OB') bei der optischen Objekterfassung zumindest erreicht ist,
**b**) in einer Zweitstufe (ZS) jedes Objekt (OB, OB') in der Roboter-Objekt-Systemumgebung (ROSU, ROSU') im Zuge des Steuerungsprogrammablaufs solange in Bezug auf eine Objektposition durch Bestimmung von Objektposenverteilung oder durch Bestimmung von Objektposenverteilung und Roboterkontakt erfasst wird bis eine zweite Roboter-Objekt-Mindestdistanz in der Roboter-Objekt-Systemumgebung (ROSU, ROSU') als Zweitstufen-Genauigkeitsbedarf (ZSGB) für alle Objekte (OB, OB') bei der objektposenverteilungs-/kontaktbasierten Objekterfassung zumindest erreicht ist.

2. Verfahren nach Anspruch 1, **dadurch gekennzeichnet, dass**
eine erste Abfrageschleife (AFS1) für jedes Objekt (OB, OB') in der Erststufe (ES) durchlaufen wird, bei der
**a**) in einem ersten Anweisungsblock (AWB1) bei jedem Durchlauf Primär-Abweichungen (P-AB) als Unsicherheit geschätzt werden, indem bei der optischen Objekterfassung ermittelte Objektpositionsdaten (OPD_{O}) mit ersten DRZ-simulierten Objektpositionsdaten (OPD1_{S}) verglichen werden,
**b**) in einem zweiten Anweisungsblock (AWB2), der nach dem ersten Anweisungsblock (AWB1) durchlaufen wird, bei jedem Durchlauf der Erststufen-Genauigkeitsbedarf (ESGB) bestimmt wird,
**c**) in einer ersten Schleifenabfrage (SAF1) eine Schleifendurchlaufbedingung derart geprüft wird, dass die als Unsicherheit geschätzten Primär-Abweichungen (P-AB) jeweils mit einem ersten Mindestdistanzwert (MDW1) des Erststufen-Genauigkeitsbedarfs (ESGB) verglichen werden und die erste Abfrageschleife (AFS1) durchlaufen wird, wenn die erste Roboter-Objekt-Mindestdistanz noch nicht erreicht ist - also bei der Unsicherheitsschätzung die jeweilige Primär-Abweichung (P-AB) größer ist als der erste Mindestdistanzwert (MDW1) - anderenfalls wird die zweistufige Synchronisation in der Zweitstufe (ZS) fortgesetzt,
**d**) beim Durchlaufen der ersten Abfrageschleife (AFS1) in einem ersten Anweisungskorrekturblock (AWKB1) die ersten DRZ-simulierten Objektpositionsdaten (OPD1_{S}) zwecks Reduzierung der Primär-Abweichungen (P-AB) für den Durchlauf in dem ersten Anweisungsblock (AWB1) verändert werden.

3. Verfahren nach Anspruch 2, **dadurch gekennzeichnet, dass**
beim Durchlauf des ersten Anweisungsblocks (AWB1) dezidierte Anweisungsschritte (AWS) durchgeführt werden, so
- ein erster Anweisungsschritt (AWS1) zur Planung einer Robotertrajektorie zum Erfassen einer Szene der Roboter-Objekt-Systemumgebung (ROSU, ROSU') unter der Annahme der Primär-Abweichungen (P-AB),
- ein zweiter Anweisungsschritt (AWS2) zum Erfassen der Roboter-Objekt-Systemumgebung (ROSU) mit Hilfe einer Optik, z.B. eine 3D-Sensorik, oder mit Hilfe einer Optik, z.B. eine 3D-Sensorik, und eines Sensors, z.B. einen RGB-Farbsensor, am Roboter (RB),
- ein dritter Anweisungsschritt (AWS3) zum Schätzen der Primär-Abweichungen (P-AB) als Unsicherheit für jedes Objekt (OB, OB') durch Vergleich der bei der optischen ROSU-Erfassung ermittelten Objektpositionsdaten (OPD_{O}) mit den ersten DRZ-simulierten Objektpositionsdaten (OPD1_{S}),
- ein vierter Anweisungsschritt (AWS4) zur Aktualisierung der Unsicherheitsschätzung für jedes Objekt (OB, OB').

4. Verfahren nach Anspruch 2 oder 3, **dadurch gekennzeichnet, dass**
beim Durchlauf des zweiten Anweisungsblocks (AWB2) weitere der dezidierten Anweisungsschritte (AWS) durchgeführt werden, so
- ein fünfter Anweisungsschritt (AWS5) zur Simulation des Ablaufs des Steuerungsprogramms (STP, STP') für Bewegungen des Roboters (RB) nach Maßgabe des Digital-Roboter-Zwillings (DRZ, DRZ'),
- ein sechster Anweisungsschritt (AWS6) zum Bestimmen des den Erststufen-Genauigkeitsbedarf (ESGB) für jedes Objekt (OB, OB') definierenden, ersten Mindestdistanzwertes (MDW1) der ersten Roboter-Objekt-Mindestdistanz, die im Zuge des simulierten Steuerungsprogrammablaufs auftritt.

5. Verfahren nach einem der Ansprüche 2 bis 4, **dadurch gekennzeichnet, dass**
beim Durchlaufen des ersten Anweisungskorrekturblocks (AWKB1) zusätzlich weitere der dezidierten Anweisungsschritte (AWS) durchgeführt werden, so
- ein siebter Anweisungsschritt (AWS7) zur Anwendung von Objektposenschätzungsmethoden auf die ersten DRZ-simulierten Objektpositionsdaten (OPD1ₛ),
- ein achter Anweisungsschritt (AWS8) zur Aktualisierung der Objektposenschätzung für jedes Objekt (OB, OB').

6. Verfahren nach einem der Ansprüche 1 bis 5, **dadurch gekennzeichnet, dass**
eine zweite Abfrageschleife (AFS2) für jedes Objekt (OB, OB') in der Zweitstufe (ES) durchlaufen wird, bei der
**a**) in einem dritten Anweisungsblock (AWB3) bei jedem Durchlauf Sekundär-Abweichungen (S-AB) als Unsicherheit geschätzt werden, indem bei der objektposenverteilungs-/kontaktbasierten Objekterfassung ermittelte Objektpositionsdaten (OPD_{O/K}) mit zweiten DRZ-simulierten Roboter-Objekt-Distanzdaten (OPD2_{S}) verglichen werden,
**b**) in einem vierten Anweisungsblock (AWB4), der nach dem dritten Anweisungsblock (AWB3) durchlaufen wird, bei jedem Durchlauf der Zweistufen-Genauigkeitsbedarf (ZESGB) bestimmt wird,
**c**) in einer zweiten Schleifenabfrage (SAF2) eine Schleifendurchlaufbedingung derart geprüft wird, dass die als Unsicherheit geschätzten Sekundär-Abweichungen (S-AB) jeweils mit einem zweiten Mindestdistanzwert (MDW2) des Zweitstufen-Genauigkeitsbedarfs (ZSGB) verglichen werden und die zweite Abfrageschleife (AFS2) durchlaufen wird, wenn die zweite Roboter-Objekt-Mindestdistanz noch nicht erreicht ist - also bei der Unsicherheitsschätzung die jeweilige Sekundär-Abweichung (S-AB) größer ist als der zweite Mindestdistanzwert (MDW2) - anderenfalls ist die zweistufige Synchronisation beendet,
**d**) beim Durchlaufen der zweiten Abfrageschleife (AFS2) in einem zweiten Anweisungskorrekturblock (AWKB2) die zweiten DRZ-simulierten Objektpositionsdaten (OPD2_{S}) zwecks Reduzierung der Sekundär-Abweichungen (S-AB) für den Durchlauf in dem dritten Anweisungsblock (AWB3) verändert werden.

7. Verfahren nach Anspruch 6, **dadurch gekennzeichnet, dass**
beim Durchlauf des dritten Anweisungsblocks (AWB3) dezidierte Anweisungsschritte (AWS) durchgeführt werden, so
- ein neunter Anweisungsschritt (AWS9) zur Probenahme von Objektposenhypothesen, insbesondere unter Berücksichtigung von physikalischen Randbedingungen, und zum Vergleichen der bei der objektposenverteilungs-/kontaktbasierten ROSU-Erfassung ermittelten Objektpositionsdaten (OPD_{O/K}) mit den zweiten DRZ-simulierten Objektpositionsdaten (OPD2_{S}),
- ein zehnter Anweisungsschritt (AWS10) zur Bestimmung einer möglichen Objektposenverteilung für jedes Objekt (OB, OB') mit Hilfe von wahrscheinlichen Objektposenhypothesen, wobei Objektposen mit einer geringeren Sekundär-Abweichung (S-AB) wahrscheinlich sind.

8. Verfahren nach Anspruch 6 oder 7, **dadurch gekennzeichnet, dass**
beim Durchlauf des vierten Anweisungsblocks (AWB4) weitere der dezidierten Anweisungsschritte (AWS) durchgeführt werden, so
- ein elfter Anweisungsschritt (AWS11) zur Simulation des Ablaufs des Steuerungsprogramms (STP, STP') für Bewegungen des Roboters (RB) mit mehreren wahrscheinlichen Objektposenhypothesen des Digital-Roboter-Zwillings (DRZ, DRZ'),
- ein zwölfter Anweisungsschritt (AWS12) zum Bestimmen des den Zweitstufen-Genauigkeitsbedarf (ZSGB) für jedes Objekt (OB, OB') definierenden, zweiten Mindestdistanzwertes (MDW2) der zweiten Roboter-Objekt-Mindestdistanz, die im Zuge des simulierten Steuerungsprogrammablaufs auftritt.

9. Verfahren nach einem der Ansprüche 6 bis 8, **dadurch gekennzeichnet, dass**
beim Durchlaufen des zweiten Anweisungskorrekturblocks (AWKB2) zusätzlich ein weiterer der dezidierten Anweisungsschritte (AWS) durchgeführt wird, so
- ein dreizehnter Anweisungsschritt (AWS13) zur genauen Abschätzung der Objektposen statischer Objekte der Objekte (OB, OB') durch Abtasten des jeweiligen statischen Objekts im Roboterkontakt.

10. Verfahren nach Anspruch 2, **dadurch gekennzeichnet, dass**
die optischen Objektpositionsdaten (OPD_{O}) zumindest eines von 3D-Bilddaten (3D-BD) und Sensordaten (SSD) enthalten.

11. Verfahren nach Anspruch 2, **dadurch gekennzeichnet, dass**
die zweistufige Synchronisation beendet ist, wenn die erste Roboter-Objekt-Mindestdistanz zumindest erreicht ist, also bei der Unsicherheitsschätzung die jeweilige Primär-Abweichung (P-AB) kleiner ist als der erste Mindestdistanzwert (MDW1).

12. Verfahren nach einem der Ansprüche 1 bis 11, **dadurch gekennzeichnet, dass**
der Digital-Roboter-Zwilling (DRZ, DRZ') nach der Synchronisation der Digital-Roboter-Zwilling (DRZ, DRZ') inklusive des den Roboter (RB) für die Objektmanipulation steuernden Steuerungsprogramms (STP, STP'), geometrischer Daten der Roboter-Objekt-Systemumgebung (ROSU, ROSU') und/oder Unsicherheitsangaben für die Objekte (OB, OB') in der Roboter-Objekt-Systemumgebung (ROSU, ROSU') aktualisiert wird.

13. Computer-Programm-Produkt (CPP) zum Konfigurieren einer Roboter-Objekt-Systemumgebung (ROSU, ROSU'), die mindestens ein Objekt (OB, OB') und einen Roboter (RB) zur Objektmanipulation und Objekterfassung aufweist, mit einem nicht-flüchtigen, lesbaren Speicher (SP), in dem prozessorlesbare Steuerprogrammbefehle eines die die ROSU-Konfiguration durchführenden Programm-Moduls (PGM) gespeichert sind, und ein mit dem Speicher (SP) verbundener Prozessor (PZ), der die Steuerprogrammbefehle des Programm-Moduls (PGM) zur ROSU-Konfiguration ausführt und dabei einen die Roboter-Objekt-Systemumgebung (ROSU, ROSU') digital repräsentierenden, den Roboter (RB) für die Objektmanipulation auf der Basis eines Steuerungsprogramms (STP) steuernden Digital-Roboter-Zwilling (DRZ, DRZ') für einen zielführenden Einsatz des Roboters (RB) in der Roboter-Objekt-Systemumgebung (ROSU, ROSU') bei der Objektmanipulation synchronisiert,
**dadurch gekennzeichnet, dass**
das Programm-Moduls (PGM) derart beschaffen und der die Steuerprogrammbefehle des Programm-Moduls (PGM) zur ROSU-Konfiguration ausführende Prozessor (PZ) derart ausgebildet sind, dass der Digital-Roboter-Zwilling (DRZ, DRZ') zweistufig synchronisiert wird, wobei
**a**) in einer Erststufe (ES) jedes Objekt (OB, OB') in der Roboter-Objekt-Systemumgebung (ROSU, ROSU') im Zuge des Steuerungsprogrammablaufs solange in Bezug auf eine Objektposition optisch erfasst wird bis eine erste Roboter-Objekt-Mindestdistanz in der Roboter-Objekt-Systemumgebung (ROSU, ROSU') als Erststufen-Genauigkeitsbedarf (ESGB) für alle Objekte (OB, OB') bei der optischen Objekterfassung zumindest erreicht ist,
**b**) in einer Zweitstufe (ZS) jedes Objekt (OB, OB') in der Roboter-Objekt-Systemumgebung (ROSU, ROSU') im Zuge des Steuerungsprogrammablaufs solange in Bezug auf eine Objektposition durch Bestimmung von Objektposenverteilung oder durch Bestimmung von Objektposenverteilung und Roboterkontakt erfasst wird bis eine zweite Roboter-Objekt-Mindestdistanz in der Roboter-Objekt-Systemumgebung (ROSU, ROSU') als Zweitstufen-Genauigkeitsbedarf (ZSGB) für alle Objekte (OB, OB') bei der objektposenverteilungs-/kontaktbasierten Objekterfassung zumindest erreicht ist.

14. Computer-Programm-Produkt (CPP) nach Anspruch 13, **dadurch gekennzeichnet, dass**
das Programm-Moduls (PGM) derart beschaffen und der die Steuerprogrammbefehle des Programm-Moduls (PGM) zur ROSU-Konfiguration ausführende Prozessor (PZ) derart ausgebildet sind, dass die Verfahrensschritte des Verfahrens nach einem der Ansprüche 2 bis 12 durchgeführt werden.

15. Robotersteuerung (RBST) zum Konfigurieren einer Roboter-Objekt-Systemumgebung (ROSU, ROSU'), die mindestens ein Objekt (OB, OB') und einen Roboter (RB) zur Objektmanipulation und Objekterfassung aufweist, mit einem Digital-Roboter-Zwilling (DRZ, DRZ'), in dem ein den Roboter (RB) in der Roboter-Objekt-Systemumgebung (ROSU, ROSU') bei der Objektmanipulation steuerndes Steuerungsprogramm (STP, STP') und ein geometrische Daten der Roboter-Objekt-Systemumgebung (ROSU, ROSU') enthaltener Datenspeicher (DSP, DSP') enthalten ist, und mit einem Konfigurationsdatenspeicher (KDSP) **gekennzeichnet durch**
ein Computer-Programm-Produkt (CPP) nach Anspruche 13 oder 14 zur Durchführung des Verfahrens nach einem der Ansprüche 1 bis 12, das mit dem Digital-Roboter-Zwilling (DRZ) und dem Konfigurationsdatenspeicher (KDSP) eine Funktionseinheit zum Konfigurieren der Roboter-Objekt-Systemumgebung (ROSU) bildet.

16. Roboter (RB) mit einer Robotersteuerung (RBST) nach Anspruch 15.
